# FASCICULE DE BREVET EUROPEEN

(11) **EP 0 389 378 B1**
(45) Date de publication et mention de la délivrance du brevet: **22.09.1993**
(21) Numéro de dépôt: 90400802.6
(22) Date de dépôt: 23.03.1990
(51) Int. Cl.: B60P 1/44

(54) **Hayon élévateur pour véhicule et son procédé de manutention**
Hebebühne für Fahrzeuge und Handhabungsverfahren
Vehicle loading platform and method of using same

(30) Priorité: 24.03.1989 FR 8903914
(43) Date de publication de la demande: 26.09.1990
(73) Titulaire: ERHEL, F-21100 Dijon (FR)
(72) Inventeur: Saussard, Philippe, F-21490 Ruffey Les Echirey (FR); Launay, Pierre, Eugène, Marie, D-21240 Talant (FR)
(74) Mandataire: Loyer, Bertrand

(56) Documents cités:
- DE-A- 3 228 829
- DE-A- 3 420 422
- DE-A- 3 531 853

## Description

La présente invention concerne un hayon du type de ceux que l'on trouve à l'arrière des véhicules de livraison et/ou de transport afin de faciliter le chargement des produits lourds et/ou encombrants en permettant éventuellement l'utilisation de chariots élévateurs pour la manutention desdits produits.

De tels hayons sont, d'une manière générale, formés d'un cadre de levage porté par une poutre fixée par des flasques à la carrosserie du véhicule et portant une plate-forme souvent repliable.

Le cadre de levage est soumis à l'action d'un vérin de levage afin d'être déplacé d'une position pour laquelle la plate-forme qu'il porte repose sur le soi à une position pour laquelle ladite plate-forme est au niveau du plancher du véhicule.

Ledit vérin de levage est fixé à la poutre à l'une de ses extrémités et en un point du cadre de levage généralement proche de la fixation de la plate-forme à son autre extrémité.

Un vérin d'inclinaison lié à la poutre et à la plate-forme permet de modifier l'inclinaison de celle-ci afin qu'elle soit toujours horizontale, lors de opérations de chargement et de déchargement, au cours des déplacements entre le sol et le plancher du véhicule.

De nombreuses dispositions ont été proposées afin de positionner un tel hayon sous la carrosserie du véhicule lorsqu' il n'est pas utilisé, notamment lorsque le véhicule se déplace, ou lorsque l'on veut effectuer un chargement ou déchargement sans utiliser le hayon.

Une telle position que l'on appellera position route permet d'escamoter ledit hayon afin qu'il ne constitue pas une pièce dépassante dangereuse pour la sécurité des autres véhicules ou des piétons. A l'heure actuelle, toutes les dispositions mises en oeuvre sont chères puisqu'elles nécessitent l'utilisation d'au moins un vérin supplémentaire, certaines nécessitent une très grande place disponible sous le véhicule tandis que pour d'autres, il faut adapter une plaque prolongeant la carrosserie du véhicule.

Un tel hayon rétractable sous le poids lourd a déjà été proposé dans le DE-A-34 20 422. Ce hayon comporte une poutre, à laquelle est fixé le cadre de levage, déplacée vers l'arrière du poids lourd ou ramenée sous ledit poids lourd par un ensemble mécanique lié au bâti dudit poids lourd. Cet ensemble mécanique comporte deux bras liés à ladite poutre, le premier mobile en rotation par rapport à la poutre et fixé à un point fixe du bâti, l'autre fixe par rapport à la poutre dont l'extrémité porte un galet déplaçable en translation dans un rail porté par le bâti. Le mouvement de la poutre est assuré par un vérin prévu spécialement à cet effet et disposé entre ladite poutre et le bâti du poids lourd.

Le DE-A-35 31 853 décrit une autre réalisation d'un hayon rétractable sous le poids lourd dans laquelle il est également mis en oeuvre un vérin uniquement destiné à assurer les déplacements en translation du hayon sous le poids lourd.

La présente invention tend à proposer un hayon pouvant se positionner sous le véhicule qui soit simple à mettre en oeuvre, peu encombrant, et, d'un prix semblable aux hayons habituels.

A cet effet, le hayon élévateur pour véhicule selon l'invention, du genre comportant un bâti de montage fixé au véhicule sur lequel un organe de translation est monté mobile en translation, un cadre de levage indéformable monté en rotation sur ledit organe de translation, et une plate-forme mobile en rotation sur le cadre de levage sous l'action d'au moins un vérin d'inclinaison, ledit cadre de levage étant mobile en rotation sous l'action d'au moins un vérin de levage et en translation par des moyens de glissement, caractérisé en ce que l'organe de translation est commandé en translation par le ou les vérins de levage et/ou le ou les vérins d'inclinaison.

Comme on le voit, un tel hayon ne comporte pas de vérin supplémentaire de translation ce qui réduit son coût par rapport aux hayons de type connu.

Le hayon selon l'invention est encore remarquable par les caractéristiques suivantes :
- les moyens de translation sont des manchons, de préférences cylindriques, solidaires de l'organe de translation, qui se déplacent dans des glissières correspondantes du bâti de montage, munies de butées avant et arrière ; ces moyens ne sont pas limitatifs et tout autre moyen de translation équivalent peut être prévu, par exemple biellette, tringlerie, etc.
- Le cadre de levage est monté en rotation sur des chapes montées sur l'organe de translation.
- Le bâti de montage comporte au moins un appui rotatif fixe, pouvant être par exemple un galet.
- Le dispositif comporte en outre au moins un bras, approximativement parallèle aux bras du cadre de levage, dit bras de compression destiné d'une part à conserver l'inclinaison de la plate-forme pendant les mouvements de levage et de descente de celle-ci, et d'autre part à absorber les efforts de chargement.

Dans une première variante de réalisation, la translation est assurée par le vérin de levage. Le vérin d'inclinaison est, de préférence, logée contre la face inférieure de la plate-forme. Selon l'invention, le vérin est monté sur une articulation à biellettes de telle sorte que le vérin puisse effectuer une rotation de la plate-forme, de 180°.

La manoeuvre de rétraction du hayon s'effectue de la manière suivante:
- on replie manuellement l'extrémité avant de la plate-forme;
- on actionne le ou les vérins d'inclinaison en extension pour relever la plate-forme et l'amener en appui contre le galet;
- on continue l'action des vérins d'inclinaison, en laissant libre le vérin de levage, afin de provoquer le levage de la plate-forme et de son cadre par rotation sur le point d'appui constitué par le galet,
- lorsque le cadre de levage est dans une position sensiblement parallèle aux manchons, on arrête le mouvement et l'on maintient la pression dans le ou les vérins d'inclinaison afin de maintenir la plate-forme en appui sur le galet, c'est-à-dire en position repliée et verrouillée par rapport au cadre de levage. Les vérins d'inclinaison ont, dans cette variante, la fonction de vérin de verrouillage, ou blocage.

Dans cette position, le ou les vérins de levage sont actionnés et assurent le déplacement de l'organe de translation sur le bâti pour être positionné sous le véhicule. La plate-forme se déplace horizontalement en roulant sur le galet.

En outre selon cette première variante, le vérin de levage est avantageusement disposé entre la partie inférieure du bâti et l'extrémité inférieure avant des bras de compression sous les bras de ceux-ci de façon à supporter les efforts de compression pendant la charge de la plate-forme et à soulager les efforts supportés par le ou les bras de compression.

Dans une seconde variante de réalisation, le déplacement peut être assurée par le ou les vérins d'inclinaison. Ceux-ci sont alors montés d'une part sur le bâti d'autre part sur la plate-forme. La manoeuvre de retrait ou rétraction comporte ici encore un pliage de la plate-forme, suivi d'une translation:
- on replie manuellement l'extrémité avant de la plate-forme;
- on relève la plate-forme soit avec le ou les vérins d'inclinaison soit manuellement, pour l'amener contre le galet;
- on actionne le vérin de levage en extension de façon à lever le cadre, le vérin d'inclinaison étant libre, la plate-forme reste en appui contre le galet et se rapproche progressivement du cadre de levage. Lorsque le ou les vérins sont en position approximativement parallèle aux manchons de glissement, on arrête le levage et l'on verrouille la plate-forme repliée sur le cadre de levage. Le verrouillage peut être obtenu par tout moyen connu:
- on actionne ensuite le ou les vérins d'inclinaison en retrait, les vérins de levage étant libres, ce qui assure le déplacement sur le bâti de l'organe de translation , du cadre et de la plate-forme, pour être positionnés sous le véhicule.

Il est également possible d'actionner le vérin de levage à la place du vérin d'inclinaison pour assurer la translation.

Cette seconde variante a l'avantage d'utiliser des plates-formes connues, indépendantes des vérins d'inclinaison donc moins coûteuses et présentant moins de risques d'avaries des circuits hydrauliques.

La présente invention sera mieux comprise et d'autres caractéristiques de celle-ci ressortiront de la description qui va suivre d'un exemple de réalisation de celle-ci en regard des dessins sur lesquels :

Les figures 1 à 4 montrent différentes positions du hayon suivant l'invention dans une première forme de réalisation.

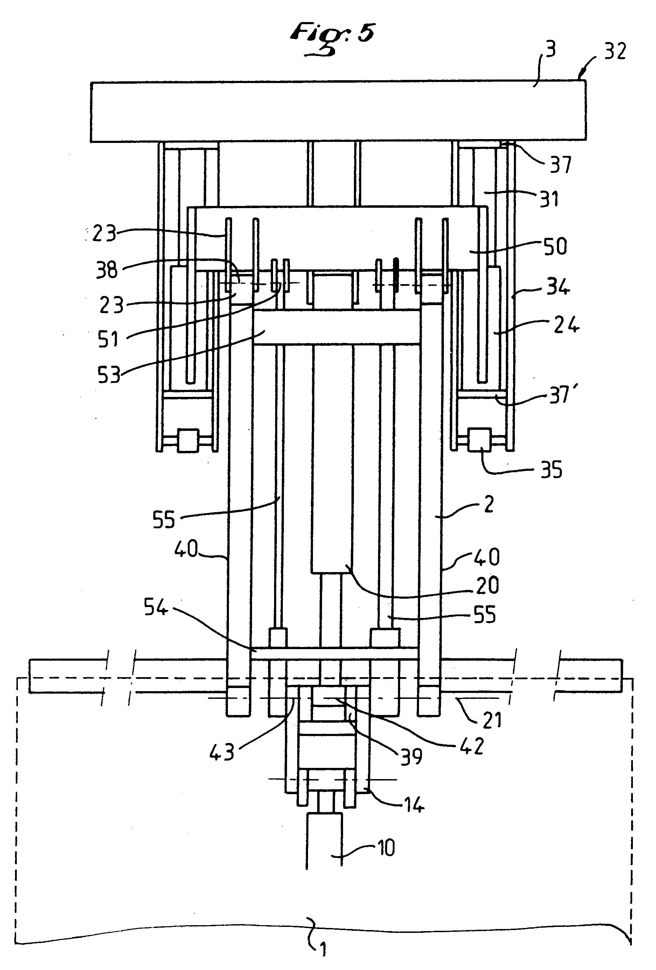

La figure 5 est une vue schématique partielle de dessus de la première forme de réalisation du hayon selon l'invention.

La figure 6 montre une variante de réalisation du hayon selon l'invention.

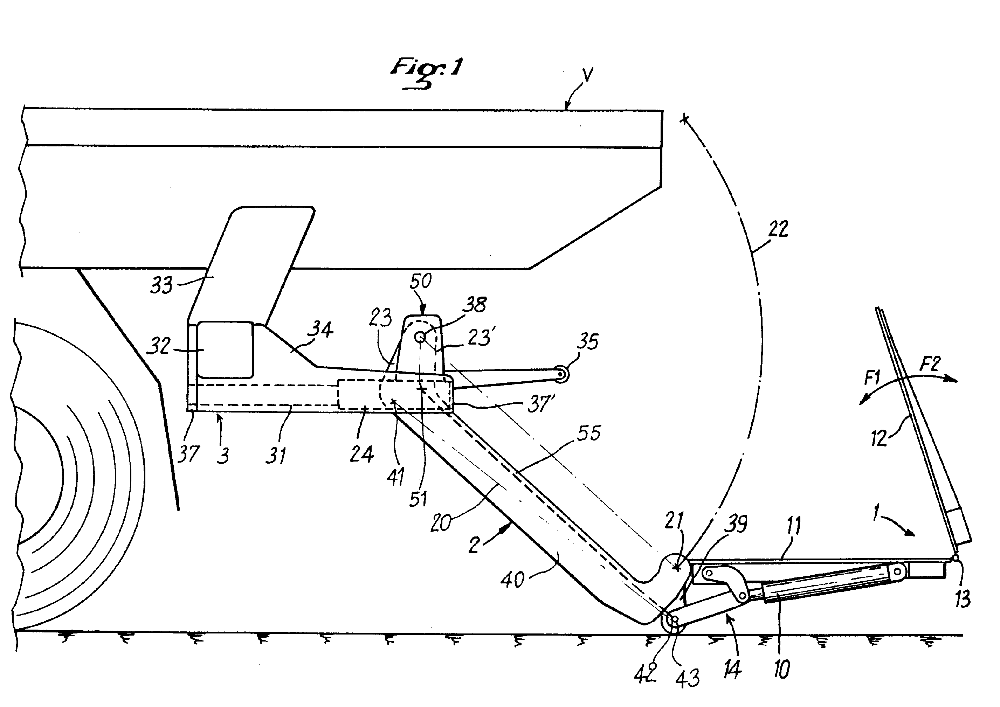

La figure 1 montre le hayon dans la position dite de travail, c'est-à-dire avec la plate-forme reposant sur le sol.

Comme on le voit ladite plate-forme 1 est formée de deux parties 11, 12 ; la partie 11 est montée mobile en rotation autour d'un axe 21 sur un cadre de levage 2 tandis que la partie 12 est montée mobile en rotation autour d'un axe 13 sur la partie 11.

De manière usuelle, la rotation suivant les directions F1 et F2 de la partie 12 par rapport à la partie 11 se fait manuellement, mais on peut prévoir un vérin hydraulique pour assurer ces mouvements.

Lors du chargement ou déchargement du véhicule V, dont seul l'arrière est schématisé, la partie 12 de la plate-forme 1 est rabattue suivant la flèche F2 jusqu'à être dans le prolongement de la partie 11 afin de former une plate-forme 1 plane.

Afin de transporter les marchandises entre le sol et le plancher du véhicule V (ou vice versa), la plate-forme est levée (ou abaissée). A cet effet, un vérin de levage 20, dont seul l'axe est représenté à la figure, assure le déplacement de l'extrémité du cadre de levage et donc de l'axe 21 le long de l'arc de cercle 22 représenté en trait mixte.

Le cadre de levage 2 est rigide et indéformable ; il comporte deux bras inextensibles 40 de levage situés à distance l'un de l'autre, destinés à lever la plate-forme. Des bras de levage sont reliés de manière connue par deux traverses 53, 54 assurant la rigidité du cadre. Le cadre 2 est recourbé vers le haut à ses deux extrémités vers l'avant chaque bras 40 se termine par une joue plate 23 destinée à s'articuler en rotation sur des chapes correspondantes 23' d'un organe de translation 50. A l'arrière l'autre extrémité supérieure est articulée en 21 sur une chape 39 portant la plate-forme 1.

L'organe de translation 50, selon l'invention, est un organe dont la fonction est d'une part de porter le cadre de levage, d'autre part d'assurer la translation du cadre par rapport au châssis du véhicule. L'organe de translation à cet effet comporte une poutre rigide, transversale par rapport à la direction de déplacement du véhicule, sur laquelle sont montées les deux chapes 23' d'articulation du cadre 2 et deux manchons 24 cylindriques et parallèles, destinés à assurer le déplacement de l'organe de translation et par conséquence du hayon tout entier, par rapport au bâti de montage 3.

Le bâti de montage 3 du hayon sur le véhicule V comporte une poutre 32 fixée audit véhicule et s'étendant transversalement par rapport à la direction de déplacement du véhicule sur approximativement toute la largeur du véhicule. Cette poutre est portée par deux flasques 33 liés au châssis du véhicule de manière fixe. La poutre porte deux autres flasques 34 supportant des glissières 31 destinées à recevoir les manchons 24 de l'organe de translation 50.

Des butées avant et arrière 37, 37' sont situées aux extrémités des glissières 31. Comme représenté, sur le dessin, lorsque le hayon est utilisé, les manchons 24 sont en appui contre les butées arrière 37'.

En outre le hayon selon l'invention comporte un moyen d'appui 35 porté par le bâti de montage du côté de son extrémité arrière, à distance des butées 37'. Ce moyen d'appui assure les fonctions suivantes :
1°) Il est destiné à recevoir la plate-forme pendant l'opération de fermeture. La plate-forme vient s'appuyer sur ce point fixe ce qui permet au cadre de se lever et d'achever la fermeture.
2°) Pendant le déplacement (rétraction ou sortie) de l'organe de translation, le moyen d'appui maintient la plate-forme et le cadre en position horizontale. La plate-forme se déplace sur ce moyen d'appui. A cet effet, on utilise avantageusement un galet, en caoutchouc ou autre.

Le bâti de montage 3 est donc fixe sur le véhicule, et l'organe de translation 50 circule d'avant en arrière et vice versa par déplacement des manchons 24 sur les glissières 31.

Le vérin de levage 20 est monté à une de ses extrémités sur le bâti de montage 3 en 41 et à l'autre extrémité sur l'axe 42 de la chape 39 portant la plate-forme 1.

Selon l'invention, on prévoit en outre au moins un bras rigide 55, inextensible, sensiblement parallèle aux bras 40 du cadre de levage monté à une extrémité 51 sur l'organe de translation 50 et à son autre extrémité 43 sur la chape 39. Ce bras est destiné d'une part à conserver l'inclinaison de la plate-forme pendant ses mouvements de levage et de descente, d'autre part à supporter la charge placée sur la plate-forme on l'appelle pour cette raison bras de compression. Dans l'exemple de réalisation, on prévoit deux bras de compression 55 représentés en tirets sur le dessin.

Les emplacements des axes d'articulation 21, 38 du cadre, 51 et 43 des bras de compression sont choisis de manière à définir un parallélogramme déformable permettant de maintenir constant l'inclinaison de la plate-forme 1 par rapport à l'horizontale, et donc son horizontalité, pendant le levage et la descente de la plate-forme.

L'inclinaison de la plate-forme 1 est commandée par le vérin d'inclinaison 10. Dans la variante représentée aux figures 1 à 4, le vérin 10 est monté sur la face inférieure de la plate-forme et est monté d'une part sur la plate-forme et d'autre part en 43 sur la chape 39. Dans l'exemple de réalisation l'axe 43 et l'axe 42 sont les mêmes.

Selon l'invention, du côté de la chape 39, on prévoit une articulation 14 à biellettes permettant une inclinaison de la plate-forme de 180° afin de réaliser la fermeture complète de la plate-forme sur le cadre 2 par le vérin 10.

Pour un étirement donné du vérin de levage 20 son extrémité 42 est immobile, la chape 39 est immobile ainsi que l'axe 43 de fixation du vérin d'inclinaison 10 ; l'allongement ou le rétrécissement du vérin d'inclinaison 10 provoque la rotation de la plate-forme autour de l'axe 21.

Cette disposition des articulations 42 et 43 sur le même axe est préférée en ce qu'elle permet d'absorber une part importante des efforts de chargement de la plate-forme; en effet les bras de compression ont pour fonction de supporter la charge de la plate-forme. Pour cette raison, ils sont montés de manière à être en extension en absence de charge. La disposition du vérin de levage selon l'invention permet de soulager l'effort supporté par les bras dans un rapport d'au moins 50%, ce qui permet de réaliser des bras moins résistants, donc plus légers et moins coûteux.

Le fonctionnement du hayon suivant cette première variante de réalisation est le suivant :

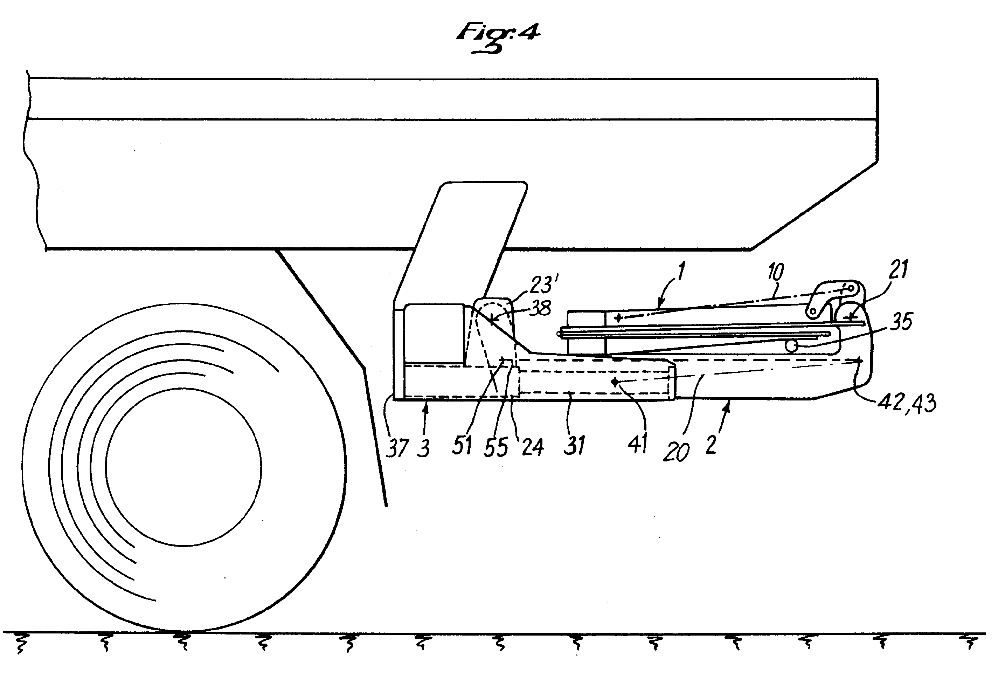

Lorsque l'on veut ramener le hayon de la position dite de travail représentée à la figure 1 à la position dite de route représentée à la figure 4 pour laquelle il est totalement positionné sous le véhicule, on envoie tout d'abord du fluide dans le vérin d'inclinaison 10 afin de le commander à l'allongement.

L'allongement du vérin 10 provoque la rotation de la plate-forme 1 préalablement repliée sur elle-même (F1) dans le sens tendant à la rapprocher du cadre de levage.

Cette opération est menée jusqu'à ce que la partie 12 de la plate-forme 1 soit en contact avec le cadre de levage 2, c'est-à-dire dans une position sensiblement horizontale ou, plus précisément, dans une position ou le vérin de levage est approximativement parallèle aux manchons 24 de coulissement.

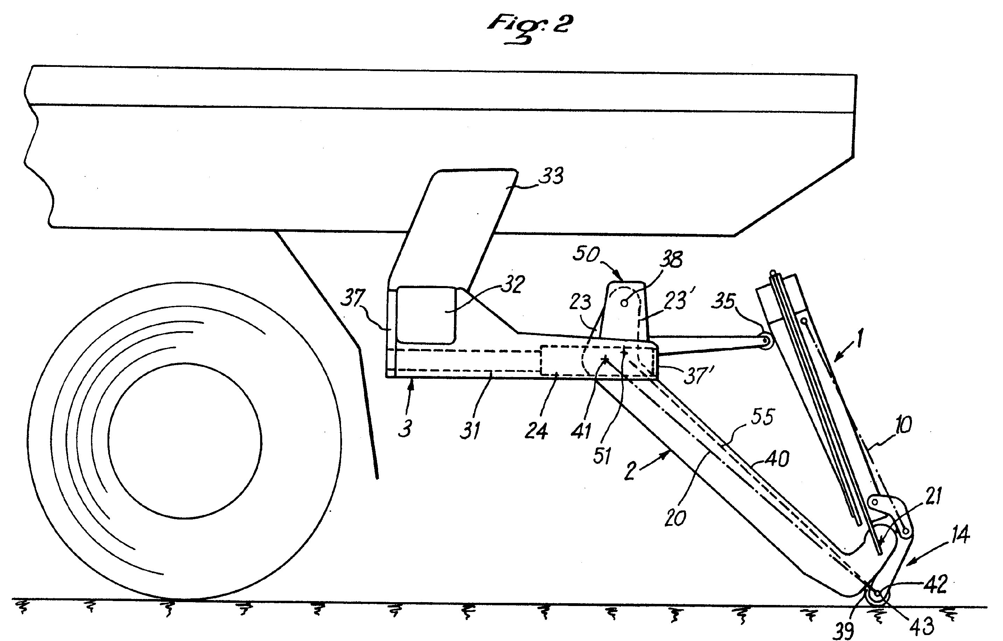

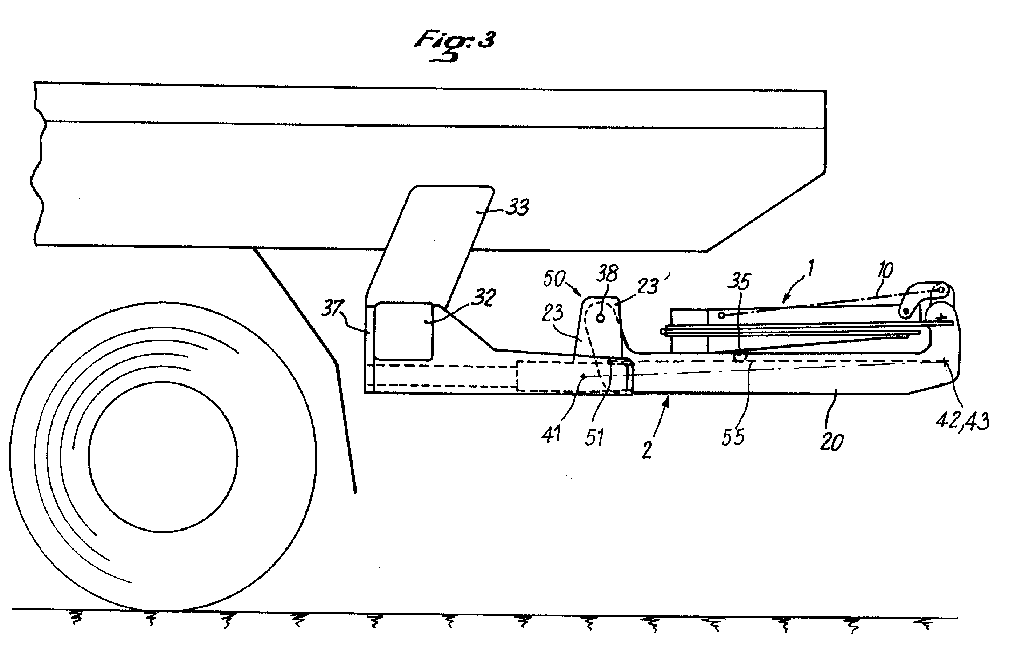

L'opération peut être décomposée en deux étapes : une première étape ou le vérin d'inclinaison provoque la rotation libre de la plate-forme qui vient en contact sur le (ou les) galet 35 (figure 2) ; une deuxième étape où le vérin d'inclinaison poursuit son effort d'allongement. La plate-forme étant en appui sur un point fixe, le rapprochement de la plate-forme et du cadre de levage est réalisé obligatoirement par soulèvement du cadre de levage 2 (figure 3).

Pendant toute cette opération, le vérin de levage est libre afin de ne pas s'opposer au soulèvement du cadre 2.

A partir de cette position, le vérin de levage 20 est commandé en rétraction afin qu'il provoque le coulissement des manchons 24 sur les glissières 31 jusqu'à ce qu'ils arrivent en appui sur les butées avant 37. A cette fin, on utilise de préférence un vérin double effet.

Pendant l'opération de coulissement, on maintient la plate-forme contre le cadre de levage par verrouillage. Ce verrouillage est obtenu en maintenant la pression dans le vérin d'inclinaison, ou par tout verrouillage mécanique de type connu. Pendant cette opération également, la plate-forme se déplace en roulant sur le galet d'appui 35.

Dans cette position représentée à la figure 4, le hayon est en position route et le véhicule peut se déplacer, le hayon ne présentant pas de risques pour les autres usagers.

La mise en position travail du hayon s'effectue en commandant l'allongement du vérin de levage 20, jusqu'à ce que les manchons arrivent en appui sur les butées arrière 37'. Puis il suffit de commander le vérin d'inclinaison 10 en rétraction, le vérin de levage étant libéré pour que le hayon se mette dans la position de la figure 2. En poursuivant la rétraction du vérin d'inclinaison 10, la plate-forme s'ouvre et le hayon est mis en position de travail.

Comme l'a montré cette description, le hayon suivant l'invention ne nécessite pas la mise en oeuvre d'un vérin supplémentaire pour sa rétraction celle-ci est assurée par le vérin de levage 20.

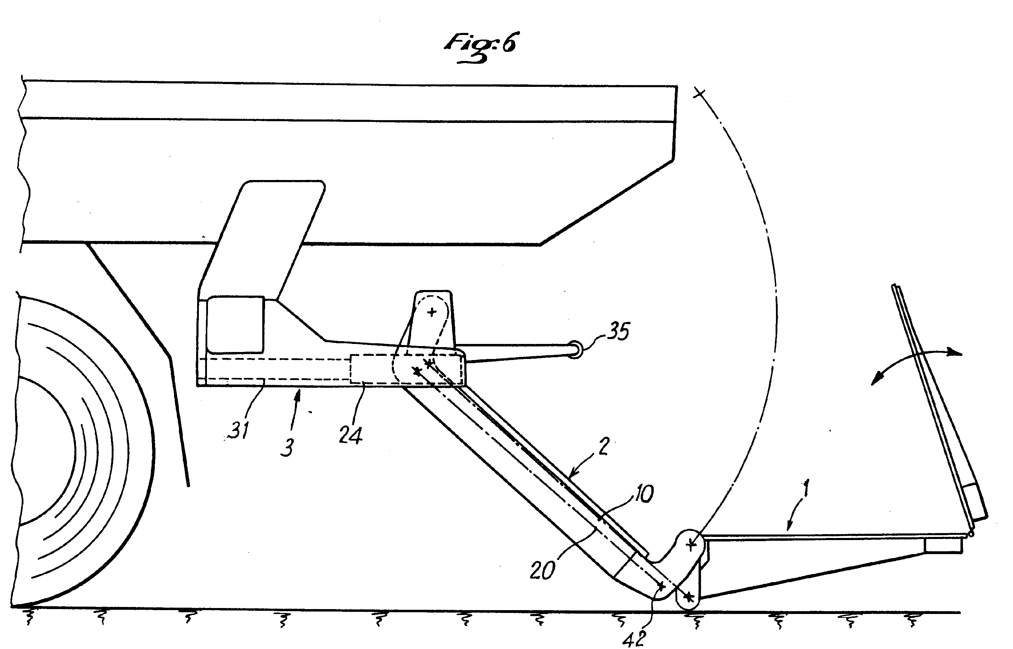

La figure 6 montre une variante de réalisation du hayon selon l'invention dans laquelle c'est le vérin d'inclinaison qui assure ou peut assurer le déplacement de l'organe de translation 50.

A cet effet, le ou les vérins d'inclinaison sont positionnés entre le bâti de montage 3 et la plate-forme 1, tandis que le ou les vérins de levage 30 sont positionnés entre l'organe de translation ou le bâti de montage et le cadre de levage 2, les articulations 42 et 43 étant distinctes. Dans cette variante, les bras de compression sont supprimés.

Le déploiement du hayon s'effectue en trois étapes:
1°) Extension du vérin d'inclinaison 10 , le vérin de levage 20 étant libre jusqu'à la butée 37';
2°) Rétraction du vérin de levage 20 - le vérin d'inclinaison 10 étant libre par son propre poids, la plate-forme se déploie (figure 2).
3°) Rétraction du vérin d'inclinaison 10 (figure 1).

Le pliage s'effectue sensiblement en sens inverse :
1°) Pliage manuel dans le sens F1 de la plate-forme 12 sur 11;
2°) Allongement du vérin d'inclinaison. Lorsque le vérin est étiré au maximum, on poursuit le mouvement de rotation de la plate-forme manuellement jusqu'à être en butée contre le galet 35 (figure 2);
3°) Levage du cadre 2 par allongement du vérin de levage, jusqu'à la position horizontale, le vérin d'inclinaison étant libre;
4°) Verrouillage manuel de la plate-forme 1 sur le cadre de levage 2;
5°) Retrait du vérin d'inclinaison, déplacement du coulisseau sur les glissières 31.

## Revendications

1. Hayon élévateur pour véhicule, du genre comportant un bâti de montage (3) fixé au véhicule (V) sur lequel un organe de translation (50) est monté mobile en translation, un cadre de levage (2) indéformable monté en rotation sur ledit organe de translation (50), et une plate-forme (1) mobile en rotation sur le cadre de levage (2) sous l'action d'au moins un vérin d'inclinaison (10), ledit cadre de levage (2) étant mobile en rotation sous l'action d'au moins un vérin de levage (20) et en translation par des moyens de glissement, caractérisé en ce que l'organe de translation (50) est commandé en translation par le ou les vérins de levage (20) et/ou le ou les vérins d'inclinaison (10).

2. Hayon selon la revendication 1, caractérisé en ce que les moyens de glissement sont des manchons (24), de préférence cylindriques, solidaires de l'organe de translation (50), qui se déplacent dans des glissières (31) correspondantes du bâti de montage, munies de butées avant (37) et arrière (37').

3. Hayon selon la revendication 1, caractérisé en ce que le cadre de levage (2) est monté en rotation sur des chapes (23') montées sur l'organe de coulissement.

4. Hayon selon la revendication 1, caractérisé en ce que le bâti de montage (3) comporte au moins un appui (35) rotatif fixe, pouvant être par exemple un galet.

5. Hayon selon l'une quelconque des revendications précédentes, caractérisé en ce qu'en combinaison le vérin de levage (20) est un vérin double effet et est solidaire d'une part du bâti de levage (3), d'autre part d'une chape (39) portant la plate-forme (1) et le vérin d'inclinaison est monté d'une part sur la face inférieure de la plate-forme et d'autre part sur la chape (39).

6. Hayon selon l'une quelconque des revendications 1 à 4, caractérisé en ce que le vérin d'inclinaison est à double effet et est monté entre la plate-forme et le bâti de montage (3), et le vérin de levage est monté entre l'organe de translation (50) et le cadre de levage (2).

7. Hayon selon la revendication 5, caractérisé en ce que le vérin d'inclinaison (10) est articulé sur la chape (39) par une articulation à biellettes (14) afin que la plate-forme puisse décrire un angle de 180° et vienne se replier sur le cadre de levage.

8. Procédé de manutention d'un hayon selon l'une des revendications 5 ou 6, dans lequel le passage de la position de travail à la position de route comporte une première étape de pliage de la plate-forme (1) sur le cadre de levage (2), suivie d'une seconde étape de rétraction du cadre et de la plate-forme portés par l'organe de translation (50), caractérisé en ce que lors de l'étape de pliage, on amène la plate-forme en contact contre le point d'appui (35) en commandant le vérin d'inclinaison (10), puis on poursuit le travail dudit vérin jusqu'à ce que le cadre de levage soit dans une position sensiblement horizontale, le vérin de levage (20) étant libre, la plate-forme étant constemment en contact sur le point d'appui (35).

9. Procédé de manutention d'un hayon selon l'une des revendications 5 ou 6, dans lequel le passage de la position de travail à la position de route comporte une première étape de pliage de la plate-forme (1) sur le cadre de levage (2), suivie d'une seconde étape de rétraction du cadre et de la plate-forme portés par l'organe de translation (50), caractérisé en ce que la rétraction du cadre de levage (2) par rapport au bâti de montage (3) est réalisée par la commande du vérin de levage (20).

10. Procédé de manutention d'un hayon selon l'une des revendications 5 ou 6, dans lequel le passage de la position de travail à la position de route comporte une première étape de pliage de la plate-forme (1) sur le cadre de levage (2), suivie d'une seconde étape de rétraction du cadre et de la plate-forme portés par l'organe de translation (50), caractérisé en ce que la rétraction du cadre de levage (2) par rapport au bâti de montage (3) est réalisée par la commande du vérin d'inclinaison (10).

## Patentansprüche

1. Hebebühne für Fahrzeuge, des Typs, mit einem am Fahrzeug (V) befestigten Montagegestell (3), auf dem ein Verschiebeorgan (50) verschiebebeweglich befestigt ist, mit einem formsteifen, auf besagtem Verschiebeorgan (50) drehbar angebrachten Hubrahmen (2) und mit einer Plattform (1), die unter der Einwirkung wenigstens einer Kippeinrichtung (10) gegenüber dem Hubrahmen (2) drehbeweglich ist, der seinerseits (2) unter der Einwirkung wenigstens einer Hubeinrichtung (20) dreh- und durch Gleitmittel verschiebebeweglich ist, **dadurch gekennzeichnet**, daß das Verschiebeorgan (50) beim Verschieben durch die Hubeinrichtung(en) (20) und/oder die Kippeinrichtung(en) (10) betätigt wird.

2. Hebebühne nach Anspruch 1, dadurch gekennzeichnet, daß die Gleitmittel aus, vorzugsweise zylindrischen, Büchsen (24) bestehen, die fest mit dem Verschiebeorgan (50) verbunden sind und die in entsprechenden, mit vorderen (37) und hinteren (37') Anschlägen versehenen Gleitschienen (31) des Montagegestells verschieblich sind.

3. Hebebühne nach Anspruch 1, dadurch gekennzeichnet, daß der Hubrahmen (2) drehbar an Gabelbügeln (23') befestigt ist, die am Gleitorgan angebracht sind.

4. Hebebühne nach Anspruch 1, dadurch gekennzeichnet, daß das Montagegestell (3) wenigstens eine drehfeste Abstützung (35) aufweist, die z.B. eine Rolle sein kann.

5. Hebebühne nach einem der vorhergehenden Ansprüche, dadurch gekennzeichnet, daß in Kombination die Hubeinrichtung (20) ein doppeltwirkender Zylinder sowie einerseits mit dem Hubgestell (3) und andererseits mit einer die Plattform (1) tragenden Gabelbüchse (39) fest verbunden ist, und daß die Kippeinrichtung zu einem an der Unterseite der Plattform und zum anderen an der Gabelbüchse (39) befestigt ist.

6. Hebebühne nach einem der Ansprüche 1 bis 4, dadurch gekennzeichnet, daß die Kippeinrichtung doppelwirkend sowie zwischen der Plattform und dem Montagegestell (3) eingebaut ist, und daß die Hubeinrichtung zwischen dem Verschiebeorgan (50) und dem Hubrahmen (2) angebracht ist.

7. Hebebühne nach Anspruch 5, dadurch gekennzeichnet, daß die Kippeinrichtung (10) an der Gabelbüchse (39) über ein Gelenk aus Anlenkstangen (14) derart angelenkt ist, daß die Plattform einen Winkel von 180° beschreiben kann und wieder auf den Hubrahmen zurückklappt.

8. Handhabungsverfahren für eine Hebebühne nach einem der Ansprüche 5 oder 6, bei welchem die Überführung von der Arbeitsstellung zur Fahrstellung einen ersten Schritt des Zusammenklappens der Plattform (1) auf dem Hubrahmen (2) umfaßt, gefolgt von einem zweiten Schritt des Zurückziehens des Rahmens und der Plattform, die vom Verschiebeorgan (50) getragen werden, dadurch gekennzeichnet, daß man während des Schritts des Zusammenklappens die Plattform in Anlagekontakt mit dem Abstützpunkt (35) bringt, indem die Kipp-einrichtung (10) betätigt wird, und daß man sodann die Arbeit besagter Einrichtung fortsetzt, bis sich der Hubrahmen in einer im wesentlichen horizontalen Lage befindet, wobei die Hubeinrichtung (20) außer Betrieb ist und die Plattform sich dauernd in Kontakt mit dem Abstützpunkt (35) befindet.

9. Handhabungsverfahren für eine Hebebühne nach einem der Ansprüche 5 oder 6, bei welchem die Überführung von der Arbeitsstellung zur Fahrstellung einen ersten Schritt des Zusammenklappens der Plattform (1) auf dem Hubrahmen (2) umfaßt, gefolgt von einem zweiten Schritt des Zurückziehens des Rahmens und der Plattform, die vom Verschiebeorgan (50) getragen werden, dadurch gekennzeichnet, daß das Zurückziehen des Hubrahmens (2) in bezug auf das Montagegestell (3) durch Betätigung der Hubeinrichtung (20) erfolgt.

10. Handhabungsverfahren für eine Hebebühne nach einem der Ansprüche 5 oder 6, bei welchem die Überführung von der Arbeitsstellung zur Fahrstellung einen ersten Schritt des Zusammenklappens der Plattform (1) auf dem Hubrahmen (2) umfaßt, gefolgt von einem zweiten Schritt des Zurückziehens des Rahmens und der Plattform, die vom Verschiebeorgan (50) getragen werden, dadurch gekennzeichnet, daß das Zurückziehen des Hubrahmens (2) in bezug auf das Montagegestell (3) durch Betätigung der Kippeinrichtung (10) erfolgt.

## Claims

1. A raisable tail gate for a vehicle, of the kind having a mounting frame (3) fixed to a vehicle (V) on which a transport device (50) is mounted for translational movement, a rigid lifting frame (2) rotatably mounted on the transport device (50), and a platform (1) rotationally movable on the lifting frame (2) under the action of at least one inclining jack (10), the lifting frame (2) being rotatably movable under the action of at least one lifting jack (20) and movable in translation by sliding means, characterised in that the transport device (50) is actuated in translation by the lifting jack or jacks (20) and/or the inclining jack or jacks (10).

2. A tail gate according to Claim 1, characterised in that the sliding means are sleeves (24), preferably cylindrical, connected to the transport device (50), which move in the corresponding slides (31) of the mounting frame, provided with forward (37) and rear (37') abutments.

3. A tail gate according to Claim 1, characterised in that the lifting frame (2) is rotatably mounted on cheeks (23') mounted on the sliding device.

4. A tail gate according to Claim 1, characterised in that the mounting frame (3) includes at least one fixed rotary bearer (35), which can be a roller, for example.

5. A tail gate according to any one of the preceding claims, characterised in that, in combination the lifting jack (20) is a double acting jack and is connected on the one hand to the lifting frame (3) and on the other hand to a cheek (39) carrying the platform (1) and the inclining jack is mounted on the one hand on the lower face of the platform and on the other hand on the cheek (39).

6. A tail gate according to any one of Claims 1 to 4, characterised in that the inclining jack is double acting and mounted between the platform and the mounting frame (3), and the lifting jack is mounted between the transport device (50) and the lifting frame (2).

7. A tail gate according to Claim 5, characterised in that the inclining jack (10) is pivoted on the cheek (39) by a pivot device formed of rods (14) so that the platform can describe an angle of 180° and fold back on to the lifting frame.

8. A method of operating a tail gate according to one of Claims 5 or 6, in which the passage from the working position to the travelling position includes a first stage of folding the platform (1) on to the lifting frame (2), followed by a second stage of retraction of the frame and of the platform carried by the transport device (50), characterised in that during the folding stage, the platform is brought into contact with the bearing point (35) by actuating the inclining jack (10), and then working of said jack is continued until the lifting frame is in a substantially horizontal position, the lifting jack (20) being out of action, the platform being constantly in contact on the bearing point (35).

9. A method of operation of a tail gate according to one of Claims 5 or 6, in which the passage from the working position to the travelling position includes a first folding stage of the platform (1) on to the lifting frame (2), then a second retraction stage of the frame and of the platform carried by the transport device (50), characterised in that the retraction of the lifting frame (2) with respect to the mounting frame (3) is effected by actuation of the lifting jack (20).

10. A method of operating a tail gate according to one of Claims 5 or 6, in which the passage from the working position to the travelling position includes a first stage of folding the platform (1) on to the lifting frame (2), followed by a second stage of retraction of the frame and of the platform carried by the transport device (50), characterised in that the retraction of the lifting frame (2) with respect to the mounting frame (3) is effected by actuation of the inclining jack (10).
